# EUROPÄISCHE PATENTSCHRIFT

(11) **EP 3 194 231 B1**
(45) Veröffentlichungstag und Bekanntmachung des Hinweises auf die Patenterteilung: **14.05.2025**
(21) Anmeldenummer: 15756863.5
(22) Anmeldetag: 14.08.2015
(51) Int. Cl.: G01C 21/34, G01C 21/36, B60K 35/00

(54) **VERFAHREN, VORRICHTUNG, SYSTEM, COMPUTERPROGRAMM UND COMPUTERPROGRAMMPRODUKT ZUR ANZEIGE VON EINFLUSSFAKTOREN VON FAHRSTRECKENABSCHNITTEN AUF EIN FAHRZEUG**
METHOD, DEVICE, SYSTEM, COMPUTER PROGRAM, AND COMPUTER PROGRAM PRODUCT FOR DISPLAYING DRIVING ROUTE SECTION FACTORS INFLUENCING A VEHICLE
PROCÉDÉ, DISPOSITIF, SYSTÈME DE PROGRAMME D'ORDINATEUR ET PRODUIT DE PROGRAMME D'ORDINATEUR POUR AFFICHER DES FACTEURS D'INFLUENCE DE TRONÇONS DE PARCOURS SUR UN VÉHICULE

(30) Priorität: 18.09.2014 DE 102014218806
(43) Veröffentlichungstag der Anmeldung: 26.07.2017
(60) Teilanmeldung: 17162728.4
(73) Patentinhaber: Bayerische Motoren Werke Aktiengesellschaft, 80809 München (DE)
(72) Erfinder: AUGST, Alexander, 80937 Muenchen (DE)
(86) Internationale Anmeldenummer: PCT/EP2015/068737
(87) Internationale Veröffentlichungsnummer: WO 2016/041712

(56) Entgegenhaltungen:
- WO-A1-2014/108556
- DE-A1- 102012 017 118
- DE-A1- 102012 017 932
- DE-A1- 102014 200 031
- DE-A1- 102014 218 809
- GB-A- 2 492 896
- GB-A- 2 494 528
- US-A1- 2009 164 063
- US-A1- 2012 203 428

## Beschreibung

Die Erfindung betrifft ein Verfahren zur Anzeige von Einflussfaktoren von Fahrstreckenabschnitten auf ein Fahrzeug. Die Erfindung betrifft des Weiteren eine Vorrichtung und ein System zur Anzeige von Einflussfaktoren von Fahrstreckenabschnitten auf ein Fahrzeug. Die Erfindung betrifft des Weiteren ein Computerprogramm und ein Computerprogrammprodukt zur Anzeige von Einflussfaktoren von Fahrstreckenabschnitten auf ein Fahrzeug.

In heutigen Fahrzeugen sind immer mehr, beziehungsweise immer modernere Bildschirme angeordnet, auf denen sich viele Informationen anzeigen lassen. Zum Stand der Technik wird insbesondere auf die DE 10 2012 017 932 A1, die GB 2 494 528 A, die WO 2014/1085556 A1 und die GB 2 492 896 A hingewiesen.

Ferner wird auf die DE 10 2014 200 031 A1 verwiesen, welche ein Verfahren zum Steuern einer aktiven Aufhängung betrifft, wobei das Verfahren Schritte des Bestimmens eines Maßes einer Straßennormalität vor dem Fahrzeug und des Vergleichens des Maßes mit einem Fahrzeugmaß aufweist. Als Reaktion auf den Vergleich wird die Anormalität als ein Typ einer Vielzahl vorbestimmter Typen eingestuft. Als Reaktion auf ein Höhenmaß der Anormalität wird die Anormalität ferner als eine kleine, mittlere und große Schwere aufweisend eingestuft. Die Aufhängung wird als Reaktion auf den Typ und die Schwere gesteuert.

Die Aufgabe, die der Erfindung zugrunde liegt, ist es, ein Verfahren und eine korrespondierende Vorrichtung zu schaffen, die dazu beitragen, Informationsinhalte an einen Fahrzeugführer intuitiv zu übermitteln.

Die Aufgabe wird gelöst durch die Merkmale der unabhängigen Patentansprüche. Vorteilhafte Ausgestaltungen sind in den Unteransprüchen gekennzeichnet.

Die Erfindung zeichnet sich aus durch ein Verfahren zur Anzeige von Einflussfaktoren von Fahrstreckenabschnitten auf ein Fahrzeug. Die Erfindung zeichnet sich des Weiteren aus durch eine Vorrichtung, die zu dem Verfahren korrespondiert. Eine erste Information zu einem ersten Fahrstreckenabschnitt wird ermittelt. Eine zweite Information zu einem zweiten Fahrstreckenabschnitt wird ermittelt. Abhängig von der ersten Information wird mindestens ein erster Parametersatz ermittelt, der repräsentativ ist für mindestens einen Einflussfaktor des ersten Fahrstreckenabschnitts auf das Fahrzeug. Abhängig von der zweiten Information wird mindestens ein zweiter Parametersatz ermittelt, der repräsentativ ist für mindestens einen Einflussfaktor des zweiten Fahrstreckenabschnitts auf das Fahrzeug. Abhängig von dem mindestens einen ersten Parametersatz und dem mindestens einen zweiten Parametersatz wird eine Anzeige erzeugt, die einen Einflussfaktor des ersten Fahrstreckenabschnitts und einen Einflussfaktor des zweiten Fahrstreckenabschnitts in Bezug zu einer vorgegebenen Referenzgröße repräsentiert.

Bevorzugt kann sich der erste und/oder der zweite Fahrstreckenabschnitt auf eine bevorstehende, insbesondere mögliche, Fahrt mit dem Fahrzeug beziehen. Besonders bevorzugt sind Fahrstreckenabschnitte solche Fahrstreckenabschnitte, die in den nächsten Fahrminuten oder Stunden vom Fahrzeug befahren werden können, also insbesondere Fahrstrecken, die sich auf die Zukunft beziehen. Zumindest einer der Fahrstreckenabschnitte kann sich auch alternativ oder zusätzlich auf die nahe Zukunft von beispielsweise weniger als 5 Sekunden, 20 Sekunden oder 45 Sekunden beziehen. Dabei kann der entsprechende Fahrstreckenabschnitt einen dem Fachmann bekannten aktuellen Bahnführungshorizont betreffen, insbesondere einem Fahrstreckenabschnitt, der sich bis zu 200 Meter in die Umgebung des Fahrzeugs erstreckt. Fahrstreckenabschnitte können beispielsweise eine Ausdehnung von weniger als 10 Meter, 100 Meter, 1 Kilometer oder 10 Kilometer haben. Diese können auch eine oder mehrere bestimmte Spuren einer Straße betreffen oder ein frei befahrbares Gelände, beispielsweise auch eine konkrete Strecke innerhalb eines in zwei Richtungen ausgedehnten frei befahrbares Geländes sein.

Die erste Information und die zweite Information können Koordinatendaten umfassen, die repräsentativ sind für einen Fahrstreckenabschnitt oder einen größeren Bereich der Fahrstrecke, zu dem der Fahrstreckenabschnitt gehört. Die Fahrstrecke kann den Verlauf der Fahrstrecke in Form von Koordinaten und/oder Eigenschaften der Fahrstrecke umfassen.

Ein Parametersatz kann aus einem oder mehreren Parametern bestehen. Ein Parameter kann beispielsweise einen Wert, eine Zuordnungstabelle und/oder eine mathematische Funktion repräsentieren. Ein Parametersatz kann abhängig von der Information ermittelt werden, insbesondere dadurch, dass ein oder mehrere Parameter anhand der Information aus einem Speicher, einer Datenbank, einem Server abgerufen werden. Der Parametersatz kann auch nach vorausbestimmten mathematischen Zusammenhängen mit Mitteln der Datenverarbeitung ermittelt werden.

Bei einer vorteilhaften Weiterbildung des Verfahrens kann das Verfahren gleichzeitig auf mehr als zwei, z.B. drei, vier oder mehr Fahrstreckenabschnitte angewandt werden. Somit ergibt sich unter anderem die Möglichkeit für den Fahrer des Fahrzeugs eine für ihn, hinsichtlich bestimmter Einflüsse auf das Fahrzeug, am besten passende Option auszuwählen.

Bei dem Fahrzeug, das vom Fahrstreckenabschnitt beim Befahren beeinflusst wird, kann es sich z.B. um ein konkretes oder, beispielsweise statistisches Referenz-Fahrzeug mit statistisch durchschnittlichen Eigenschaften handeln. Besonders bevorzugt handelt es sich bei dem Fahrzeug, auf welches sich die Einflussfaktoren beziehen, um das Fahrzeug derselben Klasse, wie das Fahrzeug in dem die Anzeige dargestellt wird. Ganz besonders bevorzugt beziehen sich die Einflussfaktoren auf das Fahrzeug, in dem die Anzeige erzeugt wird.

Vorteilhafterweise handelt es sich bei der Anzeige um eine innerhalb des Fahrzeugs erzeugte oder gezeigte grafische Darstellung oder eine Sequenz aus grafischen Darstellungen, beispielsweise eine animierte Grafik, eine Animation oder eine Videosequenz. Die Anzeige kann auf einem Informationsdisplay des Fahrzeugs, im sogenannten Kombiinstrument, im sogenannten Head-Up-Display oder auf einem Bildschirm erzeugt werden, das mit dem Fahrzeug verbunden ist oder sich im Fahrzeug befindet. Die Anzeige kann zwei oder dreidimensional wahrnehmbar ausgestaltet sein.

Durch das gezeigte Verfahren erhält ein Fahrzeugführer eine gute Übersicht über Einflussfaktoren mehrerer Straßenabschnitte. Somit kann der Fahrzeugführer auf einfache Weise sehen, ob eine Strecke beispielsweise holpriger ist als eine andere Strecke und sich dann bewusst für eine der beiden entscheiden. Will er beispielsweise das Fahrzeug schonen, so kann er die weniger holprige wählen. Will er bewusst eine holprigere Strecke wählen, so kann er dies auch tun. Weiterhin kann er so eine Strecke nach seinem Geschmack wählen, ohne sich zu verschätzen.

Weiterhin ermöglicht das Verfahren eine unkomplizierte und besonders intuitive Übermittlung von Informationsinhalten an den Fahrer bzw. Insassen des Fahrzeugs. Diese ermöglichen auch eine sehr gute Übereinstimmung zwischen der Erwartung zu einem Fahr-Erlebnis auf einer gewählten Fahrstrecke und dem Fahr-Erlebnis, das dort tatsächlich eintritt. Dies wird ermöglicht, auch ohne dass der Fahrer sich mit komplexer Materie der Beeinflussung des Fahrzeugs durch unterschiedliche Gegebenheiten der Fahrbahn auskennt. Ein weiterer Vorteil ergibt sich beispielsweise beim Transport empfindlicher Güter und/oder schlafender Kinder und Ähnlichem.

Durch den Bezug zur Referenzgröße erhält der Fahrer eine noch intuitivere Information, da er somit den Streckenabschnitt mit beispielsweise schon befahren Streckenabschnitten vergleichen kann.

Gemäß einer vorteilhaften Ausgestaltung werden der erste Parametersatz und der zweite Parametersatz abhängig von mindestens einer physikalischen Fahrbahneigenschaft des jeweiligen Fahrstreckenabschnitts ermittelt, bevorzugt abhängig von einer bestimmten Kombination unterschiedlicher Fahrbahneigenschaften der jeweiligen Fahrstreckenabschnitte.

Bevorzugt werden der erste Parametersatz und der zweite Parametersatz in Abhängigkeit von im Wesentlichen derselben und/oder entsprechend passender physikalischen Fahrbahneigenschaft ermittelt. Dabei kann es sich bei den Einflussfaktoren um physikalische, insbesondere mechanische Einflussfaktoren, z.B. Krafteinwirkungen oder Vibrationen, insbesondere einer bestimmten Art und/oder Amplitude und/oder eines bestimmten Amplitudenverlaufs und/oder Kräfteverlaufs, und ähnlichem handeln.

Vorteilhafterweise wird der erste Parametersatz und/oder der zweite Parametersatz jeweils abhängig von einer bestimmten Kombination unterschiedlicher Fahrbahneigenschaften der jeweiligen Fahrstreckenabschnitte ermittelt, wobei zumindest ein oder zwei Parameter repräsentativ sind für dieselben Einflussfaktoren, beispielsweise bestimmte physikalische Fahrbahneigenschaften.

Gemäß einer vorteilhaften Ausgestaltung repräsentieren zumindest ein Parameter des ersten Parametersatzes und/oder zumindest ein Parameter des zweiten Parametersatzes einen vertikaldynamischen Einfluss auf das Fahrzeug, insbesondere der auf die Fahrgastzelle des Fahrzeugs wirkenden vertikaldynamischen Beschleunigungseinflüsse.

Vertikaldynamische Beschleunigungen umfassen hierbei beispielsweise Wankbeschleunigung und/oder Nick-Beschleunigung, und/oder Hubbeschleunigungen. Besonders bevorzugt repräsentiert dabei der erste Parametersatz und/oder der zweite Parametersatz eine Kombination aus den Werten, die von dieser Art der Beschleunigungen, bevorzugt eineindeutig abhängig sind.

Der erste und/oder der zweite Parametersatz können dabei einen statistischen Wert repräsentieren, der zum Beispiel bestimmte vertikaldynamische Einflüsse auf das Fahrzeug, bevorzugt in Bezug auf zumindest zwei unterschiedliche Frequenzbereiche, insbesondere Ortsfrequenzbereiche, repräsentiert.

Dabei kann das Verfahren einen Schritt zum Ermitteln eines vertikaldynamischen Einflusses auf das Fahrzeug, zum Beispiel auch aus Datenbankinformationen, umfassen. Ein solcher vertikaldynamischer Einfluss kann in Abhängigkeit der ermittelten Fahrbahneigenschaften einen Einfluss oder mehrere Einflüsse dieser Eigenschaften auf ein Fahrzeug oder das Fahrzeug umfassen.

Dabei können die Einflüsse, zum Beispiel physische Beschleunigungseinflüsse sein und/oder sich dabei auf eine oder mehrere Geschwindigkeitswerte, beispielsweise bestimmte Referenzgeschwindigkeitswerte beziehen, mit welchen die Fahrstrecke durch ein Fahrzeug befahren wird. Zum Beispiel können die Einflüsse für 1-5 verschiedene Geschwindigkeitswerte ermittelt werden, die für die Fahrstreckenabschnitt typisch sind, wie zum Beispiel 30 km/h, 50, km/h, 60 km/h, 120 km/h, 180 km/h. Solche Referenzgeschwindigkeitswerte können in Abhängigkeit der Straßenart oder anhängig von konkreten statistischen Werten, die die Fahrstrecke betreffen, gewählt werden. Somit lässt sich die Anzahl der zu ermittelnden Werte reduzieren und passendere Parameter ermitteln.

Das Ermitteln eines oder zwei Parameter, der eine signifikante Abhängigkeit von vertikaldynamischen Beschleunigungen von der Information zu einer Fahrstrecken aufweist, ist besonders vorteilhaft, weil durch solche Parameter auch ein Maß für ein Offroad-Fahrerlebnis repräsentiert werden kann. Wie der Fachmann weiß, kann ein Offroad-Fahrerlebnis mit typischen oder bestimmten auf das Fahrzeug und den Fahrer wirkenden Beschleunigungen oftmals explizit gewünscht oder explizit nicht gewünscht sein. Es kann auch nur ein bestimmtes Offroad-Fahrerlebnis, zum Beispiel nur tiefere Frequenzen mit einer auf einen bestimmten Wert begrenzten Amplitude gewünscht sein. Hierdurch kann ein solches Offroad-Fahrerlebnis in Bezug auf zwei oder mehrere Fahrstreckenabschnitte, die das Fahrzeug in der nahen Zukunft befahren wird oder kann, für den Fahrer des Fahrzeugs durch die Anzeige sehr anschaulich repräsentiert werden.

Gemäß einer vorteilhaften Ausgestaltung werden der erste Parametersatz und der zweite Parametersatz jeweils aus einer vorgegebenen Kombination der Fahrbahneigenschaften, die unterschiedlichen Klassen von Fahrbahneigenschaften angehören, ermittelt.

Solche bestimmten Kombinationen von Fahrbahneigenschaften können beispielsweise auch vorab, anhand mehrerer an sich relativ abstrakter Wünsche optimiert werden. Derartige Wünsche umfassen beispielsweise einen möglichst schonenden Umgang mit dem Fahrzeug und/oder eine Verringerung von auf den Fahrer oder Insassen wirkende Beschleunigungen (Querbeschleunigungen, Nickbeschleunigung, Rollbeschleunigungen, etc.) und/oder Vibrationen und/oder ein bestimmtes Fahrerlebnis und/oder eine gewünschte Kombination dieser Einflussfaktoren.

Bei der Auswahl von Kombinationen der Einflussfaktoren können auch Gewichtungsfaktoren bestimmt werden, die ein Maß für Berücksichtigung zumindest zwei verschiedenen Einflussfaktoren beim Ermitteln des entsprechenden Parameters bestimmen.

Somit kann mittels des Verfahrens und dem entsprechenden Fahrzeug einem bestimmten objektiven oder subjektiven Wunsch eines Fahrzeugfahrers nach einem bestimmten Fahrerlebnis, Charakter des Fahrzeugs z.B. einer hierfür geeigneten oder optimalen Routenwahl gerecht werden.

Gemäß einer vorteilhaften Ausgestaltung betrifft eine Klasse von Fahrbahneigenschaften permanente physikalische Fahrbahnunebenheiten.

Die permanenten physikalischen Fahrbahnunebenheiten umfassen insbesondere vertikale Fahrbahnunebenheiten im Wesentlichen in Längsrichtung und/oder im Wesentlichen in Querrichtung, insbesondere in einem ersten Ortsfrequenzbereich und/oder in einem zweiten Ortsfrequenzbereich.

Die permanenten physikalischen Fahrbahnunebenheiten umfassen alternativ oder zusätzlich ein Vorhandensein zumindest eines vorgegebenen Unebenheitsmuster der Fahrbahn, und/oder zumindest ein quantitatives für ein Unebenheitsmuster der Fahrbahn, und/oder eine relative Gewichtung von mehreren Mustern vorgegebener Art.

Ein Unebenheitsmuster kann eine Fahrbahnwelle, ein Schlagloch, eine, beispielsweise regelmäßig vorkommenden Spalt zwischen den Betonplatten, eine Spurrinne, etc. sein. Ein quantitatives Maß kann in Abhängigkeit eines geometrischen Maßes, zum Beispiel Tiefe und/oder Höhe und/oder Formfaktor und/oder Häufigkeit des Unebenheitsmusters gewählt werden.

Die permanenten physikalischen Fahrbahnunebenheiten umfassen alternativ oder zusätzlich insbesondere ein Maß für Querbeschleunigungen, die auf ein Fahrzeug oder das Fahrzeug beim Befahren des Fahrstreckenabschnitts wirken in Bezug auf eine oder mehrere Geschwindigkeiten oder in einer Form die auf Geschwindigkeitswert normiert ist.

Wenn der Fahrer beispielsweise viele Stunden, zum Beispiel in den Urlaub mit Kindern fährt oder wenn ein LKW-Fahrer empfindliche Güter zu transportieren hat, so wollen die Fahrer in beiden Fällen die wirkenden Querbeschleunigungen, zumindest im Verhältnis zur Fahrgeschwindigkeit minimieren um beispielsweise die Kinder nicht aufzuwecken und/oder die Güter nicht zu beschädigen.

Gemäß einer vorteilhaften Ausgestaltung betrifft eine Klasse von Fahrbahneigenschaften physikalische Beschleunigungseinflüsse auf das Fahrzeug oder ein anderes Fahrzeug, insbesondere vertikaldynamische Beschleunigungseinflüsse auf das Fahrzeug in Längsrichtung und/oder im Wesentlichen in Querrichtung, die auf das Fahrzeug oder ein anderes Fahrzeug in Bezug auf eine oder mehrere Fahrgeschwindigkeiten in einem ersten Frequenzbereich und/oder in einem zweiten Frequenzbereich zu erwarten sind.

Die Frequenzbereiche umfassen insbesondere Ortsfrequenzbereiche. Der Ortsfrequenzbereich einer Fahrstrecke bezieht sich insbesondere auf die Welligkeit der Fahrbahn in Bezug auf die Welligkeit mit einer bestimmten Ausdehnung in Längs- oder Querrichtung. Der Ortsfrequenzbereich wird insbesondere mittels einer zeitdiskreten Fourier-Analyse ermittelt, insbesondere mittels einer Fourier-Transformation. Als Fourier-Transformation ist hier zusammenfassend eine Methode der Fourier-Analyse bezeichnet, die es erlaubt, kontinuierliche, aperiodische Signale in ein kontinuierliches Spektrum zu zerlegen. Die Funktion, die dieses Spektrum beschreibt, wird auch bezeichnet als Fourier-Transformierte oder Spektralfunktion. Im Wesentlichen umfasst die Ermittlung des Ortsfrequenzbereich die Bildung einer Spektralfunktion bevorzugt mit diskreten Formen der Fourier-Analyse, beispielsweise mittels einer schnellen Fourier-Transformation (FFT), einer Cosinustransformation und/oder einer modifizierten diskreten Cosinustransformation (MDCT), aufgelöst nach einem Ort, bzw. nach einer Information, die den Ort repräsentiert.

Besonders bevorzugt handelt es sich um zumindest zwei unterschiedliche Ortsfrequenzbereiche der Fahrstrecke oder Ortsfrequenzbereiche in Bezug auf das fahrende Fahrzeug, weil das von den Fahrzeuginsassen empfundene Fahrerlebnis von diesen stark abhängig ist. Ein erster Frequenzbereich kann zum Beispiel in etwa 0,2 - 30 Hz sein. Ein solcher Bereich ist oftmals von Fahrern von Offroad-Fahrzeugen aufgrund eines bestimmten damit verbundenen kinästhetischen Erlebnisses stark favorisiert. Ein zweiter Frequenzbereich kann zum Beispiel in etwa 20 Hz - 350 Hz sein. Dabei handelt es sich wiederum um Vibrationen, die durch das Gehörsystem und auch direkt körperlich wahrgenommen werden. Frequenzen aus diesem Bereich erzeugen bei den Insassen des Fahrzeugs ein deutlich unterscheidbares Erlebnis als Frequenzen aus dem ersten Bereich.

Somit kann der Fahrer des Fahrzeugs anhand der Anzeige abschätzen, welche der zwei, zum Beispiel zur Auswahl stehenden (Offroad-) Fahrstrecken für ihn die beste ist. Die Anzeige kann dabei grafisch sehr anschaulich gestaltet sein und den entsprechenden Parameter zu einer, zum Beispiel bereits erlebten Fahrstrecke in einer Gegenüberstellung veranschaulichen, sodass der Fahrer ein vorhergesagtes Erlebnis zu einer ersten Fahrstrecke und/oder zweiten Fahrstrecke mit einem bereits gemachtem Erlebnis vergleichen kann. Somit muss er sich nicht mit wenig aussagekräftigen Absolutwerten beschäftigen und nicht notwendigerweise mit den Frequenzbereichen auskennen.

Gemäß der vorliegenden Erfindung repräsentiert die Anzeige einen Einflussfaktor des ersten Fahrstreckenabschnitts und einen Einflussfaktor des zweiten Fahrstreckenabschnitts in Bezug zu einer vorgegebenen Referenzgröße. Die Referenzgröße wird abhängig von einer Information ermittelt, die repräsentativ ist für mindestens einen Einflussfaktor eines Fahrstreckenabschnitts, der bereits in der Vergangenheit von dem Fahrer des Fahrzeugs und/oder von dem Fahrzeug befahren wurde oder aktuell befahren wird.

Die Referenzgröße umfaßt einen historischen Wert in Bezug auf das Fahrzeug und/oder den Fahrer des Fahrzeugs. So kann es sich beispielsweise um einen historischen Wert eines jeweiligen Parameters handeln. Dabei kann sich der historische Wert insbesondere auf die letzten weniger als 50, 100, 1000 km beziehen, und/oder auf die Fahrstrecken derselben Art (z.B. Autobahnen, Bundesstraßen, Landstraßen, Feldwege, Offroadstrecken), insbesondere solche, die in einer Navigationskarte als dieselbe Klasse der Fahrstrecken enthalten sind.

Dabei können die vom Fahrer beim Fahren anderer Fahrzeuge, gesammelte Werte, beispielsweise zusammen mit anderen personenbezogenen Einstellungen, in das erfindungsgemäße Fahrzeug übertragen werden.

Alternativ oder zusätzlich bezieht sich die Referenzgröße auf einen aktuellen, insbesondere gemessenen, Wert des Parameters.

Ein derart ermittelte Referenzgröße erlaubt dem Fahrer die in der Anzeige repräsentierte ermittelte Prognose für eine oder zwei alternative zur Auswahl stehende Fahrstreckenabschnitte mit einem von ihm erlebten Wert zu vergleichen. Ist ihm die Straße beispielsweise zu holprig, kann er eine Straße, die zumindest 30% weniger holprig ist, suchen.

Gemäß einer vorteilhaften Ausgestaltung umfassen der erste Parametersatz und/oder der zweite Parametersatz zumindest zwei Parameter, welche abhängig von zumindest zwei von folgenden Einflussfaktoren des Fahrstreckenabschnitts ermittelt werden: zumindest einem statistischen Wert und/oder zumindest einem qualitativen Wert zur Art des Einflussfaktors, und/oder zumindest einem Verlaufswert des Einflussfaktors in Bezug auf Fahrtzeit oder Position.

Vorteilhafterweise kann der statistische Parameter des ersten oder des zweiten Parametersatzes eine Kumulation einer physikalischen Fahrbahneigenschaft repräsentieren, die bevorzugt einer bestimmten Klasse von Fahrbahneigenschaften angehört, insbesondere im Verlauf des ersten oder des zweiten Fahrstreckenabschnitts.

Der zumindest eine qualitative Wert gibt Hinweis zu der Art der physikalischen Fahrbahneigenschaft und/oder zu der Art des Einflusses auf das Fahrzeug.

Der Verlaufswert kann eine Veränderung der Einflussgröße im Verlauf des Fahrstreckenabschnitts, z.B. auch einen Verteilungswert, repräsentieren. Vorteilhafterweise kann der Verlaufswert eine Veränderungstendenz der jeweiligen Einflussgröße, zum Beispiel Anstiegs-, Abfall-, Verteilungseigenschaften, etc. repräsentieren. Dieser kann bei dem Ermitteln des ersten und/oder zweiten Einflussfaktors berücksichtigt werden. Dabei können auch einhergehend mit jeweils unterschiedlichen Verlaufswerten der Einflussgrößen Verlaufswerte der Wechselwirkungen zwischen zwei oder mehreren Parametern innerhalb des jeweiligen Fahrstreckenabschnitts ermittelt bzw. berücksichtigt werden.

Dabei kann die Anzeige auch Einflussfaktoren des ersten Fahrstreckenabschnitts und die Einflussfaktoren des zweiten Fahrstreckenabschnitts in Abhängigkeit von den ermittelten Verlaufswerten der Wechselwirkungen zwischen zumindest zwei Parametern jeweiliger Parametersätze innerhalb jeweiliger Fahrstreckenabschnitte umfassen.

Gemäß einer vorteilhaften Ausgestaltung wird für die Anzeige eine grafische Darstellung durch eine Zuordnung oder Umrechnung nach einer vorgegebenen Formel der Parameter des ersten und/oder des zweiten Parametersatzes zu grafischen Elementen erzeugt. Dabei kann die Anzeige aus den derart ermittelten grafischen Elementen zusammengesetzt werden. Bei den grafischen Elementen kann es sich um vorgefertigte, bereits im Speicher abgelegte Elemente, wie so genannten Bitmaps, handeln. Die Anzeige kann alternativ oder zusätzlich auch mit an sich bekannten Mitteln der Simulation bzw. mathematischer Modellierung erzeugt werden.

Ein weiterer wesentlicher Teil des gezeigten Verfahrens betrifft eine Repräsentation zumindest zweier Einflussfaktoren auf das Fahrzeug in einer symbolischen Form. Dabei umfasst die Anzeige bevorzugt eine symbolische Abbildung für das Fahrzeug und/oder für einen oder mehrere Einflussfaktoren.

Besonders bevorzugt verändert sich dabei das Aussehen der symbolischen Abbildung, insbesondere die angezeigten Symbole oder das Aussehen eines derart dargestellten Fahrzeugs in Abhängigkeit der ermittelten Einflussfaktoren.

Dabei kann das Verfahren einen weiteren Schritt umfassen, bei dem für einen oder mehrere Einflussfaktoren mehrere Grafiken dargestellt werden, die einen unterschiedlichen Zustand des Fahrzeugs darstellen. Dabei kann es sich bei dem Zustand des Fahrzeugs um eine Verformung des Fahrzeugs in einer oder mehreren Abstufungen handeln.

Gemäß einer vorteilhaften Ausgestaltung wird für die Anzeige zumindest ein statistischer Wert mittels Veränderung einer symbolischen Darstellung des Fahrzeugs repräsentiert und/oder zumindest ein qualitativer Wert zur Art des Einflussfaktors mittels Veränderung einer weiteren symbolischen Darstellung des Fahrzeugs repräsentiert und/oder zumindest ein Verlaufswert eines Parameters mittels eines, insbesondere symbolischen, Verlaufs nach Fahrtzeit oder nach Fahrstrecke repräsentiert.

Besonders bevorzugt kann die Anzeige eine symbolische Darstellung des Fahrzeugs umfassen, wobei ein Teil der Anzeige den Zustand des Fahrzeugs in Abhängigkeit von den Einflussgrößen des ersten Fahrstreckenabschnitts und ein weiterer Teil des Fahrzeugs in Abhängigkeit von dem zweiten Fahrstreckenabschnitt dargestellt wird. Der Zustand des Fahrzeugs kann eine symbolische und/oder imaginierte Form umfassen. Besonders bevorzugt ist eine übertriebene Darstellung, das bedeutet dass das Fahrzeug nach dem Befahren der Fahrstrecke nicht unbedingt so aussehen muss, wie in der Anzeige dargestellt.

Die Anzeige kann mehrere Grafiken oder Varianten einer Grafik umfassen, die eine Verwandlung des symbolisch dargestellten Fahrzeugs abhängig von den ermittelten Parametersätzen darstellen, die erforderlichen Eigenschaften des Fahrzeugs symbolisiert, um die Fahrstrecke zu befahren.

Alternativ oder zusätzlich kann die Anzeige auch eine oder mehrere, insbesondere in einem weiteren Schritt des Verfahrens generierte Diagramme repräsentieren. Diese können einen statistischen Wert und/oder einen Verlaufswert eines oder mehrerer Einflussfaktoren in einer grafischen Form visualisieren. Alternativ oder zusätzlich kann die Anzeige auch Zahlenwerte umfassen.

Gemäß einer vorteilhaften Ausgestaltung umfassen der erste und der zweite Fahrstreckenabschnitt jeweils einen Teil von zumindest zwei alternativen Routen des Fahrzeugs, wobei die alternativen Routen sich bevorzugt auf dasselbe Ziel oder Zwischenziel beziehen.

Gemäß einer vorteilhaften Ausgestaltung umfassen der erste Fahrstreckenabschnitt und der zweite Fahrstreckenabschnitt zumindest teilweise Teile einer vorgegebenen Fahrzeugroute.

Gemäß einer vorteilhaften Ausgestaltung wird die erste Information und/oder die zweite Information ermittelt in Abhängigkeit von einem Bereitstellen eines Ziel eines im Fahrzeug betriebenen Navigationssystems, und/oder einem Bereitstellen einer Navigationskarte, und/oder einem Bereitstellen von Daten, die von einem Server außerhalb des Fahrzeugs bereitgestellt werden, insbesondere einschließlich Abruf der Daten in Abhängigkeit von zumindest einer Information über das Ziel oder einer Information aus einer Navigationskarte.

Gemäß einer vorteilhaften Ausgestaltung werden die erste Information und/oder die zweite Information in Abhängigkeit von einer Wahrscheinlichkeitsberechnung zu der Route des Fahrzeugs ermittelt, insbesondere bezüglich der Wahrscheinlichkeit zu der Auswahl des ersten Fahrstreckenabschnitts und des zweiten Fahrstreckenabschnitts.

Dabei kann im Rahmen des Verfahrens aus der Wahrscheinlichkeitsinformation ermittelt werden, welche Fahrstreckenabschnitte mit welcher Wahrscheinlichkeit befahren werden. Dies kann anhand einer ermittelten oder geschätzten Wahrscheinlichkeit zu Abbiegerichtungen, Ein- und Ausfahrten, Abzweigungen, Kreisverkehrsausfahrten, etc. ermittelt werden, die das Fahrzeug nehmen wird. Die Wahrscheinlichkeitswerte können auch aus statistischen Werten in Bezug auf das Fahrzeug oder mehrere Fahrzeuge ermittelt werden.

Gemäß einer vorteilhaften Ausgestaltung wird eine Information zu zumindest einer Maßnahme abhängig von mindestens einem Parameter des ersten Parametersatzes und/oder des zweiten Parametersatzes ermittelt, die den jeweiligen Einflussfaktor auf das Fahrzeug, insbesondere auf eine bestimmte Weise oder im vorausbestimmten Maße, verändert. Das Verfahren umfasst ferner einen der folgenden Schritte: Visualisieren einer Information zu der ermittelten Maßnahme und/oder Visualisieren einer Bedienaktion des Fahrers, die zu der Maßnahme führt, und/oder eine Aktivierung der Maßnahme mit Mitteln des Fahrzeugs und Visualisieren einer Information für den Fahrer über diese Aktivierung, bevorzugt in der Anzeige.

Dabei kann die Maßnahme beispielsweise einhergehend mit der Anzeige vorgeschlagen, automatisch umgesetzt oder zu einer Umsetzung vorbereitet werden.

Gemäß einer vorteilhaften Ausgestaltung umfasst die Maßnahme eine oder mehrere Umschaltoptionen für das Fahrwerk des Fahrzeugs und/oder für ein Fahrerassistenzsystem des Fahrzeugs, wobei bevorzugt bei mehreren Optionen eine jeweilige ermittelte oder abgeschätzte Wirkung repräsentiert wird.

Beispielsweise kann angezeigt werden, welche Wirkung es hätte, wenn das Fahrwerk straffer oder weicher, höher oder niedriger eingestellt wird. Weiterhin kann beispielsweise angezeigt werden, welche Wirkung es hätte, auf einen Allradantrieb oder mehrere zur Verfügung stehende Varianten eines Allradbetriebs umzuschalten und Ähnliches.

Beispielsweise kann angezeigt werden, welche Wirkung es hätte, wenn ein Fahrerassistenzsystem welches Informationen, insbesondere Warnungen oder Handlungsempfehlungen, z.B. bezüglich Bahnführung des Fahrzeugs, an den Fahrer ausgibt und/oder in die Längsdynamik oder Querdynamik des Fahrzeugs eingreift, auf eine oder mehrere Umschaltoptionen, insbesondere andere, als aktuell aktiven Umschaltoptionen umgeschaltet wird.

Beispielsweise kann sich dabei die Empfindlichkeit oder eine Reaktion eines Fahrerassistenzsystems von bestimmten Einflussfaktoren bzw. auf bestimmte Einflussfaktoren verändert werden.

Dabei kann, z.B. mittels Symbolen, angezeigt werden, welche Wirkung es jeweils hätte, auf die zumindest zwei zur Verfügung stehende Umschaltoptionen des Fahrerassistenzsystems umzuschalten.

Gemäß einer vorteilhaften Ausgestaltung werden Daten über die Fahrbahnbeschaffenheit mittels eines oder mehrerer perzeptiver Sensoren des Fahrzeugs ermittelt. Die erste Information zu dem ersten Fahrstreckenabschnitt und/oder die zweite Information zu dem zweiten Fahrstreckenabschnitt und/oder die Referenzgröße werden in Abhängigkeit von den Daten ermittelt.

Besonders bevorzugt wird zumindest die Referenzgröße auf diese Weise ermittelt. Somit kann der Fahrer des Fahrzeugs mittels der Anzeige, die zumindest zwei prognostizierten Parametersätze für den ersten und zweiten Fahrstreckenabschnitt mit dem aktuellen Wert des jeweiligen Parametersatzes vergleichen, der einen aktuellen Einflussfaktor repräsentiert. Dabei kann er zum Beispiel entscheiden, ob er ein stärkeres Offroad-Fahrerlebnis als aktuell bevorzugt oder in Kauf nehmen will.

Gemäß einer vorteilhaften Ausgestaltung wird ein Fahrzeugprofil bereitgestellt, das repräsentativ ist für das Fahrzeug. Mindestens ein Parameter des ersten Parametersatzes und/oder des zweiten Parametersatzes wird abhängig von dem Fahrzeugprofil ermittelt.

Dabei kann der erste Parametersatz und/oder der zweite Parametersatz abhängig von einer oder mehreren Eigenschaften des Fahrzeugs ermittelt werden, insbesondere in Bezug auf die Eigenschaften die unmittelbar oder mittelbar die Geländegängigkeit des Fahrzeugs betreffen.

Gemäß einer vorteilhaften Ausgestaltung wird mindestens ein Parameter des erste Parametersatzes und/oder des zweiten Parametersatzes ermittelt abhängig von Daten, die repräsentativ sind dafür, wie das Fahrzeug auf vorgegebene physikalische Fahrbahneigenschaften reagiert.

Solche Daten können beispielsweise eine Funktion repräsentieren, die eine Weitergabe der auf das Fahrzeug wirkenden Beschleunigungen auf die Fahrgastzelle oder Sitze des Fahrzeugs repräsentieren. Dabei kann es sich um eine, insbesondere systemtheoretische Funktion handeln, die das Fahrzeug oder eine bestimmte Fahrzeugeigenschaft, insbesondere die Eigenschaft, auf Beschleunigungseinwirkungen zu reagieren oder solche, z.B. von den Rädern zu den Sitzen oder Lenkrad zu übertragen, insgesamt erfasst. Die Daten können auch bestimmte Eigenschaften mechanischer und/oder hydraulischer und/oder mechatronischer Systeme des Fahrzeugs, insbesondere systemtheoretisch, repräsentieren. Dabei kann auch z.B. berücksichtigt werden, welche vertikaldynamischen Frequenzen wie gut durch elektronische Fahrzeugsysteme gedämpft werden können.

Gemäß einer vorteilhaften Ausgestaltung werden der erste und der zweite Parametersatz abhängig von der aktuellen Beladung und/oder von der aktueller Sitzbelegung und/oder der aktueller Achslastverteilung des Fahrzeugs ermittelt.

Dabei kann es sich bei den Eigenschaften des Fahrzeugs um permanente Eigenschaften und/oder um den aktuellen oder einem erwarteten Zustand einer veränderlichen Eigenschaft handeln.

Gemäß einer vorteilhaften Ausgestaltung wird ein Personenprofil bereitgestellt, das zumindest einem Fahrzeuginsassen zugeordnet ist. Mindestens ein Parameter des ersten Parametersatzes und/oder des zweiten Parametersatzes werden ermittelt abhängig von dem Personenprofil und/oder abhängig von mehreren Personenprofilen, falls mehrere Personenprofile bereitgestellt werden.

Ein Personenprofil kann z.B. repräsentierend sein für die persönliche Empfindlichkeit einer Person zu bestimmten Einflussfaktoren oder persönlichen Vorlieben bzw. Präferenzen zu bestimmten Einflussfaktoren. Es ist z.B. bekannt, dass unterschiedliche Personen unterschiedlich empfindlich zu verschiedenen vertikaldynamischen Beschleunigungseinflüssen bzw. querdynamischen Beschleunigungseinflüssen oder Schwingungen sind. Somit können auch diese Unterschiede berücksichtigt werden.

Gemäß einer vorteilhaften Ausgestaltung wird mindestens ein Parameter des ersten Parametersatzes und/oder des zweiten Parametersatzes mit einem vorgegebenen Höchstwert verglichen. Falls der Wert größer ist als der Höchstwert wird eine Information ermittelt zu zumindest einer möglichen Maßnahme, und/oder Umschaltdaten werden ermittelt zu einer, insbesondere automatischen, Veränderung einer Fahrzeugeinstellung.

Die Vorrichtung kann auch als portable Vorrichtung ausgebildet sein. Die Vorrichtung ist somit beispielsweise in einem portablen Navigationsgerät, Smartphone und/oder Tablet-PC ausgebildet. Die portable Vorrichtung kann bevorzugt ausgebildet sein zum:
- Ermitteln von Daten mittels einer Schnittstelle aus dem Fahrzeugbordnetz, und/oder
- Ermitteln von Daten aus einer Navigationskarte oder einer externen Datenbank, und/oder
- Ermitteln zumindest eines Personenprofil und/oder Fahrzeugprofil.

Gemäß einem weiteren Aspekt zeichnet sich die Erfindung durch ein System gemäß Anspruch 12 aus. von Fahrstreckenabschnitten auf ein Fahrzeug und/oder eine vorteilhafte Ausgestaltung des Verfahrens zur Anzeige von Einflussfaktoren von Fahrstreckenabschnitten auf ein Fahrzeug mit dem Fahrzeug und/oder der Datenverarbeitungsvorrichtung auszuführen.

Gemäß einem weiteren Aspekt zeichnet sich die Erfindung durch ein Computerprogramm gemäß Anspruch 13 aus.

Gemäß einem weiteren Aspekt zeichnet sich die Erfindung durch ein Computerprogrammprodukt gemäß Anspruch 14 aus.

Bei dem Fahrzeug handelt es sich im Rahmen der Erfindung bevorzugt um ein Kraftfahrzeug oder Motorrad. Somit entstehen mehrere oben diskutierte Vorteile und mehrere weitere für den Fachmann nachvollziehbare Vorteile.

Ausführungsbeispiele der Erfindung sind im Folgenden anhand der schematischen Zeichnung näher erläutert.

Es zeigt:

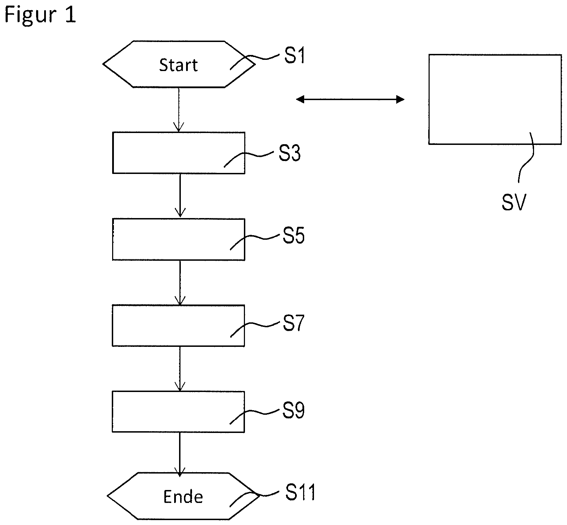

- Figur 1: ein Ablaufdiagramm eines Programms zur Anzeige von Einflussfaktoren von Fahrstreckenabschnitten auf ein Fahrzeug.

Figur 1 zeigt ein Ablaufdiagramm eines Programms zur Anzeige von Einflussfaktoren von Fahrstreckenabschnitten auf ein Fahrzeug.

Das Programm kann beispielsweise mittels einer Vorrichtung SV abgearbeitet werden, die insbesondere mindestens eine Recheneinheit, einen Programm- und Datenspeicher sowie beispielsweise eine oder mehrere Kommunikationsschnittstellen aufweist und die beispielsweise in einem Fahrzeug angeordnet ist. Der Programm- und Datenspeicher und die Recheneinheit der Vorrichtung SV können in einer Baueinheit und/oder verteilt auf mehrere Baueinheiten ausgebildet sein. Die Vorrichtung SV kann auch als portable Vorrichtung ausgebildet sein.

Die portable Vorrichtung ist beispielsweise dazu ausgestaltet, Daten mit dem Fahrzeug und einer Datenverarbeitungsvorrichtung auszutauschen, die insbesondere von dem Fahrzeug entfernt angeordnet ist.

Das Programm kann beispielsweise alternativ oder zusätzlich verteilt auf der Vorrichtung SV, insbesondere der portablen Vorrichtung, dem Fahrzeug und/oder der Datenverarbeitungsvorrichtung abgearbeitet werden.

Die Vorrichtung SV kann auch als Vorrichtung zur Anzeige von Einflussfaktoren von Fahrstreckenabschnitten auf ein Fahrzeug bezeichnet werden.

Das Programm wird in einem Schritt S1 gestartet, in dem beispielsweise Variablen initialisiert werden.

In einem Schritt S3 wird ein Ziel eines im Fahrzeug betriebenen Navigationssystems bereitgestellt. Alternativ oder zusätzlich wird eine Navigationskarte bereitgestellt. Alternativ oder zusätzlich werden Daten bereitgestellt, die von einem Server außerhalb des Fahrzeugs bereitgestellt werden. Insbesondere werden diese Daten in Abhängigkeit von zumindest einer Information über das Ziel oder eine Information aus einer Navigationskarte abgerufen.

In einem Schritt S5 wird insbesondere abhängig von den in dem Schritt S3 bereitgestellten Informationen, also dem Ziel und/oder der Navigationskarte und/oder den Daten, eine erste Information zu einem ersten Fahrstreckenabschnitt und eine zweite Information zu einem zweiten Fahrstreckenabschnitt ermittelt.

Der erste Fahrstreckenabschnitt und der zweite Fahrstreckenabschnitt umfassen beispielsweise zumindest teilweise Teile einer vorgegebenen Fahrzeugroute.

Die erste Information und/oder die zweite Information werden beispielsweise in Abhängigkeit von einer Wahrscheinlichkeitsberechnung zu einer Route des Fahrzeugs, insbesondere bezüglich der Wahrscheinlichkeit zu der Auswahl des ersten Fahrstreckenabschnitts und des zweiten Fahrstreckenabschnitts ermittelt.

Alternativ oder zusätzlich werden Daten über die Fahrbahnbeschaffenheit mittels eines oder mehrerer perzeptiver Sensoren des Fahrzeugs ermittelt und die erste Information zu dem ersten Fahrstreckenabschnitt und/oder die zweite Information zu dem zweiten Fahrstreckenabschnitt in Abhängigkeit von den Daten ermittelt.

In einem Schritt S7 wird abhängig von der ersten Information mindestens ein erster Parametersatz ermittelt, der repräsentativ ist für mindestens einen Einflussfaktor beispielsweise einer physikalischen Fahrbahneigenschaft auf das Fahrzeug. Zusätzlich wird abhängig von der zweiten Information mindestens ein zweiter Parametersatz ermittelt, der repräsentativ ist für mindestens einen Einflussfaktor beispielsweise einer physikalischen Fahrbahneigenschaft auf das Fahrzeug. Stimmen der erste und der zweite Fahrstreckenabschnitt im Wesentlichen überein, so unterscheidet sich insbesondere der jeweilige Einflussfaktor, für den die jeweiligen Parametersätze repräsentativ sind. Stimmen der erste und der zweite Fahrstreckenabschnitt nicht überein, so kann sich der jeweilige Einflussfaktor unterscheiden, für den die jeweiligen Parametersätze repräsentativ sind oder alternativ gleich sein.

Zusätzlich wird im Schritt S7 eine Referenzgröße ermittelt, abhängig von einer Information, die repräsentativ ist für mindestens einen Einflussfaktor eines Fahrstreckenabschnitts, der bereits in der Vergangenheit vom Fahrer des Fahrzeugs und/oder von Fahrzeug befahren wurde oder aktuell befahren wird.

Der erste Parametersatz und der zweite Parametersatz können beispielsweise abhängig von mindestens einer physikalischen Fahrbahneigenschaft des jeweiligen Fahrstreckenabschnitts ermittelt werden. Diese können umfassen jeweils mehrere Werte der physikalischen Fahrbahneigenschaft innerhalb der Fahrstrecke bzw. eines Fahrstreckenabschnitts oder eine Funktion, die einen Verlauf der entsprechenden Werte repräsentiert.

Dabei ergibt sich ein besonderer Vorteil, dass auch ein Verlauf der Wechselwirkungen zwischen unterschiedlichen Einflussfaktoren ermittelt und in der Anzeige repräsentiert werden kann.

Alternativ oder zusätzlich kann ein Fahrzeugprofil bereitgestellt werden, das repräsentativ ist für das Fahrzeug und mindestens ein Parameter des ersten Parametersatzes und/oder des zweiten Parametersatzes abhängig von dem Fahrzeugprofil ermittelt werden.

Alternativ oder zusätzlich kann ein Parameter des ersten Parametersatzes und/oder des zweiten Parametersatzes ermittelt werden abhängig von Daten, die repräsentativ sind dafür, wie das Fahrzeug auf vorgegebene physikalische Fahrbahneigenschaften reagiert.

Alternativ oder zusätzlich wird der erste und der zweite Parametersatz beispielsweise abhängig von der aktuellen Beladung und/oder von der aktueller Sitzbelegung und/oder der aktueller Achslastverteilung des Fahrzeugs ermittelt.

Eine Beladung des Fahrzeugs kann die Empfindlichkeit des Fahrzeugs zu bestimmten Einflussfaktoren, insbesondere die Resonanzfrequenzen des Fahrzeugs wesentlich beeinflussen.

Auch kann die Beladung selbst sehr unterschiedliche Empfindlichkeit zu bestimmten Einflussfaktoren aufweisen. Besonders signifikant kann sich eine solche Empfindlichkeit bei Gefahrgut äußern.

Mit der Berücksichtigung der Beladung, insbesondere eines Beladungsprofils (analog Personenprofil), können die für das Befahren der ersten und zweiten Fahrstrecke relevanten Einflussfaktoren mittels Anzeige besser verglichen werden.

Alternativ oder zusätzlich wird ein Personenprofil bereitgestellt, das zumindest einem Fahrzeuginsassen zugeordnet ist und mindestens ein Parameter des ersten Parametersatzes und/oder des zweiten Parametersatzes wird abhängig von dem Personenprofil ermittelt.

Zumindest ein Parameter des ersten Parametersatzes und/oder zumindest ein Parameter des zweiten Parametersatzes repräsentieren beispielsweise einen vertikaldynamischen Einfluss auf das Fahrzeug.

Der erste Parametersatz und der zweite Parametersatz werden beispielsweise jeweils aus einer vorgegebenen Kombination der Fahrbahneigenschaften ermittelt, die unterschiedlichen Klassen von Fahrbahneigenschaften angehören.

Eine Klasse von Fahrbahneigenschaften betrifft beispielsweise permanente physikalische Fahrbahnunebenheiten.

Eine Klasse von Fahrbahneigenschaften betrifft beispielsweise physikalische Beschleunigungseinflüsse auf das Fahrzeug oder auf ein anderes Fahrzeug.

Der erste Parametersatz und/oder der zweite Parametersatz umfassen beispielsweise zumindest zwei Parameter, welche abhängig von zumindest zwei von folgenden Einflussfaktoren des Fahrstreckenabschnitts ermittelt werden:
- zumindest einem statistischen Wert, und/oder
- zumindest einem qualitativen Wert zur Art des Einflussfaktors, und/oder
- zumindest einem Verlaufswert des Einflussfaktors in Bezug auf Fahrtzeit oder Position.

In einem Schritt S9 wird abhängig von dem mindestens einen ersten Parametersatz und dem mindestens einen zweiten Parametersatz eine Anzeige erzeugt, die einen Einflussfaktor des ersten Fahrstreckenabschnitts und einen Einflussfaktor des zweiten Fahrstreckenabschnitts repräsentiert. Zusätzlich kann die Anzeige auch einen Einflussfaktor des ersten Fahrstreckenabschnitts und einen Einflussfaktor des zweiten Fahrstreckenabschnitts in Bezug zu der vorgegebenen Referenzgröße repräsentieren.

Für die Anzeige wird beispielsweise eine grafische Darstellung durch eine Zuordnung oder Umrechnung nach einer vorgegebenen Formel der Parameter des ersten und/oder des zweiten Parametersatzes zu grafischen Elementen erzeugt.

Für die Anzeige wird beispielsweise zumindest ein statistischer Wert mittels Veränderung einer symbolischen Darstellung des Fahrzeugs repräsentiert und/oder zumindest ein qualitativer Wert zur Art des Einflussfaktors mittels Veränderung einer weiteren symbolischen Darstellung des Fahrzeugs repräsentiert und/oder zumindest ein Verlaufswert eines Parameters mittels eines Verlaufs nach Fahrtzeit oder nach Fahrstrecke repräsentiert.

Die erfindungsgemäße Anzeige ist als eine vergleichende Darstellung ausgestaltet, die einen Vergleich zumindest eines Einflussfaktors des ersten Fahrstreckenabschnitts mit zumindest einem Einflussfaktor des zweiten Fahrstreckenabschnitts repräsentiert. Dabei kann, bevorzugt mit grafischen Mitteln, eine Beziehung zwischen den jeweiligen Einflussfaktoren derselben oder korrespondierenden Art hergestellt werden.

Zusätzlich kann bei dem Verfahren ein Unterschied zwischen einem Einflussfaktor des ersten Fahrstreckenabschnitts und dem Einflussfaktor des zweiten Fahrstreckenabschnitts ermittelt werden und die Anzeige in Abhängigkeit von dem ermittelten Unterschied erzeugt werden.

Eine solche Anzeige kann dabei den ermittelten Unterschied oder eine Hervorhebung des ermittelten Unterschieds repräsentieren. Der Unterschied kann additive und/oder multiplikative und/oder logarithmische Komponenten umfassen.

Dabei kann die Anzeige z.B. eine Differenz, einen prozentualen Unterschied oder den für menschliche Wahrnehmung besonders signifikantes logarithmisches Verhältnis zumindest zweier Einflussfaktoren repräsentieren.

Der ermittelte Unterschied kann dabei auf eine Distanzeinheit, insbesondere die Länge des Fahrstreckenabschnitts normiert werden. Auch kann dabei der ermittelte Unterschied auf eine Zeiteinheit oder auf die Fahrtzeit normiert werden.

Somit können die, bevorzugt in der Anzeige hervorgehobenen Unterschiede durch den Benutzer "auf einen Blick" erfasst werden. Die Hervorhebung der Unterschiede kann dabei mit grafischen Mitteln, z.B. das Variieren der Farben, Größen, Linien, etc. erfolgen.

In einem Schritt S11 wird das Programm beendet und kann gegebenenfalls wieder in dem Schritt S1 gestartet werden.

Alternativ oder zusätzlich kann eine Information zu zumindest einer Maßnahme abhängig von mindestens einem Parameter des ersten Parametersatzes und/oder des zweiten Parametersatzes ermittelt werden, die den jeweiligen Einflussfaktor auf das Fahrzeug, insbesondere auf eine bestimmte Weise oder im vorausbestimmten Maße, verändert. Hieraufhin kann beispielsweise zusätzlich eine Information zu der ermittelten Maßnahme visualisiert werden, und/oder eine Bedienaktion des Fahrers visualisiert werden, die zu der Maßnahme führt, und/oder die Maßnahme aktiviert werden mit Mitteln des Fahrzeugs und eine Information für den Fahrer über diese Aktivierung visualisiert werden.

Die Maßnahme umfasst beispielsweise eine oder mehrere Umschaltoptionen für das Fahrwerk des Fahrzeugs und/oder für ein Fahrerassistenzsystem des Fahrzeugs.

Alternativ oder zusätzlich kann mindestens ein Parameter des ersten Parametersatzes und/oder des zweiten Parametersatzes mit einem vorgegebenen Höchstwert verglichen werden und, falls der Wert größer ist als der Höchstwert, eine Information zu zumindest einer möglichen Maßnahme ermittelt werden, und/oder Umschaltdaten ermittelt werden zu einer Veränderung einer Fahrzeugeinstellung.

## Patentansprüche

1. Verfahren zur Anzeige von Einflussfaktoren von Fahrstreckenabschnitten auf ein Fahrzeug, bei dem
eine erste Information zu einem ersten Fahrstreckenabschnitt und abhängig von der ersten Information mindestens ein erster Parametersatz ermittelt wird, der repräsentativ ist für mindestens einen Einflussfaktor des ersten Fahrstreckenabschnitts auf das Fahrzeug,
zusätzlich eine zweite Information zu einem zweiten Fahrstreckenabschnitt ermittelt wird und abhängig von der zweiten Information mindestens ein zweiter Parametersatz ermittelt wird, der repräsentativ ist für mindestens einen Einflussfaktor des zweiten Fahrstreckenabschnitts auf das Fahrzeug,
**dadurch gekennzeichnet, dass** abhängig von dem mindestens einen ersten Parametersatz und abhängig von dem mindestens einen zweiten Parametersatz eine Anzeige für einen Fahrzeugführer erzeugt wird, die einen Einflussfaktor des ersten Fahrstreckenabschnitts und einen Einflussfaktor des zweiten Fahrstreckenabschnitts repräsentiert,
wobei die Anzeige als eine vergleichende Darstellung ausgestaltet ist, die einen Vergleich zumindest eines Einflussfaktors des ersten Fahrstreckenabschnitts mit zumindest einem Einflussfaktor des zweiten Fahrstreckenabschnittes repräsentiert,
wobei die Anzeige einen Einflussfaktor des ersten Fahrstreckenabschnitts und einen Einflussfaktor des zweiten Fahrstreckenabschnitts in Bezug zu einer vorgegebenen Referenzgröße repräsentiert, und
wobei die Referenzgröße abhängig von einer Information ermittelt wird, die repräsentativ ist für mindestens einen Einflussfaktor eines Fahrstreckenabschnitts, der bereits in der Vergangenheit von dem Fahrer des Fahrzeugs und/oder von dem Fahrzeug befahren wurde oder aktuell befahren wird.

2. Verfahren nach Anspruch 1, wobei der erste Parametersatz und der zweite Parametersatz abhängig von mindestens einer physikalischen Fahrbahneigenschaft des jeweiligen Fahrstreckenabschnitts ermittelt werden.

3. Verfahren nach einem die vorangegangenen Ansprüche, bei dem für die Anzeige
- zumindest ein statistischer Wert mittels Veränderung einer symbolischen Darstellung des Fahrzeugs repräsentiert wird, und/oder
- zumindest ein qualitativer Wert zur Art des Einflussfaktors mittels Veränderung einer weiteren symbolischen Darstellung des Fahrzeugs repräsentiert wird, und/oder
- zumindest ein Verlaufswert eines Parameters mittels eines Verlaufs nach Fahrtzeit oder nach Fahrstrecke repräsentiert wird.

4. Verfahren nach einem der vorangegangenen Ansprüche, bei dem die erste Information und/oder die zweite Information ermittelt wird in Abhängigkeit von:
- einem Bereitstellen eines Ziel eines im Fahrzeug betriebenen Navigationssystems,
- und/oder einem Bereitstellen einer Navigationskarte,
- und/oder einem Bereitstellen von Daten, die von einem Server außerhalb des Fahrzeugs bereitgestellt werden

5. Verfahren nach einem der vorhergehenden Ansprüche, bei dem
- eine Information zu zumindest einer Maßnahme abhängig von mindestens einem Parameter des ersten Parametersatzes und/oder des zweiten Parametersatzes ermittelt wird, die den jeweiligen Einflussfaktor auf das Fahrzeug, insbesondere auf eine bestimmte Weise oder im vorausbestimmten Maße, verändert,
ferner umfassend einen der folgenden Schritte:
- Visualisieren einer Information zu der ermittelten Maßnahme, und/oder
- Visualisieren einer Bedienaktion des Fahrers, die zu der Maßnahme führt, und/oder
- eine Aktivierung der Maßnahme mit Mitteln des Fahrzeugs und Visualisieren einer Information für den Fahrer über diese Aktivierung.

6. Verfahren nach Anspruch 6, wobei die Maßnahme eine oder mehrere Umschaltoptionen für das Fahrwerk des Fahrzeugs und/oder für ein Fahrerassistenzsystem des Fahrzeugs umfasst.

7. Verfahren nach einem der vorhergehenden Ansprüche, bei dem
- Daten über die Fahrbahnbeschaffenheit mittels eines oder mehrerer perzeptiver Sensoren des Fahrzeugs ermittelt werden und
- die erste Information zu dem ersten Fahrstreckenabschnitt und/oder die zweite Information zu dem zweiten Fahrstreckenabschnitt und/oder eine Referenzgröße in Abhängigkeit von den Daten ermittelt wird.

8. Verfahren nach einem der vorhergehenden Ansprüche, wobei ein Fahrzeugprofil bereitgestellt wird, das repräsentativ ist für das Fahrzeug, und wobei mindestens ein Parameter des ersten Parametersatzes und/oder des zweiten Parametersatzes abhängig von dem Fahrzeugprofil ermittelt wird.

9. Verfahren nach einem der vorhergehenden Ansprüche, wobei ein Personenprofil bereitgestellt wird, das zumindest einem Fahrzeuginsassen zugeordnet ist, und mindestens ein Parameter des ersten Parametersatzes und/oder des zweiten Parametersatzes ermittelt wird abhängig von dem Personenprofil.

10. Verfahren nach einem der vorhergehenden Ansprüche, bei dem mindestens ein Parameter des ersten Parametersatzes und/oder des zweiten Parametersatzes mit einem vorgegebenen Höchstwert verglichen wird und, falls der Wert größer ist als der Höchstwert, eine Information ermittelt wird zu zumindest einer möglichen Maßnahme und/oder Umschaltdaten ermittelt werden zu einer Veränderung einer Fahrzeugeinstellung.

11. Vorrichtung zur Anzeige von Einflussfaktoren von Fahrstreckenabschnitten auf ein Fahrzeug, wobei die Vorrichtung dazu ausgebildet ist, ein Verfahren nach einem der Ansprüche 1 bis 10 auszuführen.

12. System, wobei das System eine Vorrichtung, ein Fahrzeug und eine Datenverarbeitungsvorrichtung aufweist, wobei die Vorrichtung nach Anspruch 11 ausgebildet ist, wobei die Vorrichtung ferner eine portable Vorrichtung ist und dazu ausgestaltet ist, Daten mit dem Fahrzeug und der Datenverarbeitungsvorrichtung auszutauschen und das Verfahren nach einem der Ansprüche 1 bis 10 zusammen mit dem Fahrzeug und/oder der Datenverarbeitungsvorrichtung auszuführen.

13. Computerprogramm zur Anzeige von Einflussfaktoren von Fahrstreckenabschnitten auf ein Fahrzeug, wobei das Computerprogramm ausgebildet ist, ein Verfahren nach einem der Ansprüche 1 bis 10 durchzuführen bei seiner Ausführung auf einer Datenverarbeitungsvorrichtung für ein System nach Anspruch 12 und/oder in einer Vorrichtung nach Anspruch 11.

14. Computerprogrammprodukt umfassend ein von einer Datenverarbeitungsvorrichtung lesbares Medium, auf dem ausführbarer Programmcode gemäß eines Computerprogramms nach Anspruch 13 gespeichert ist, wobei der Programmcode bei Ausführung durch eine Datenverarbeitungsvorrichtung für ein System nach Anspruch 12 oder durch eine Vorrichtung nach Anspruch 11 das Verfahren nach einem der Ansprüche 1 bis 10 ausführt.

## Claims

1. Method for displaying driving route section factors influencing a vehicle, in which
a first item of information concerning a first driving route section and, depending on the first item of information, at least one first set of parameters, which is representative of at least one factor of the first driving route section influencing the vehicle, are determined,
in addition, a second item of information concerning a second driving route section is determined and, depending on the second item of information, at least one second set of parameters, which is representative of at least one factor of the second driving route section influencing the vehicle, is determined,
**characterized in that**, depending on the at least one first set of parameters and depending the at least one second set of parameters, a display for a vehicle driver that represents an influencing factor of the first driving route section and an influencing factor of the second driving route section is produced,
wherein the display is designed as a comparative presentation, which represents a comparison of at least one influencing factor of the first driving route section with at least one influencing factor of the second driving route section,
wherein the display represents an influencing factor of the first driving route section and an influencing factor of the second driving route section with reference to a prescribed reference variable, and
wherein the reference variable is determined depending on an item of information that is representative of at least one influencing factor of a driving route section that has already been driven in the past or is currently being driven by the driver of the vehicle and/or by the vehicle.

2. Method according to Claim 1, wherein the first set of parameters and the second set of parameters are determined depending on at least one physical roadway characteristic of the respective driving route section.

3. Method according to one of the preceding claims, in which, for the display
- at least one statistical value is represented by means of variation of a symbolic representation of the vehicle, and/or
- at least one qualitative value concerning the kind of influencing factor is represented by means of variation of a further symbolic representation of the vehicle, and/or
- at least one course value of a parameter is represented by means of a curve on the basis of the driving time or on the basis of the driving route.

4. Method according to one of the preceding claims, in which the first item of information and/or the second item of information is determined in dependence on:
- provision of a destination of a navigation system operated in the vehicle,
- and/or provision of a navigation map,
- and/or provision of data that are provided by a server outside the vehicle.

5. Method according to one of the preceding claims, in which
- an item of information concerning at least one measure that changes the respective factor influencing the vehicle, in particular in a specific way or to a predetermined extent, is determined depending on at least one parameter of the first set of parameters and/or the second set of parameters,
also comprising one of the following steps:
- visually presenting an item of information concerning the measure determined, and/or
- visually presenting an operating action by the driver that leads to the measure, and/or
- an activation of the measure by means of the vehicle and visually presenting an item of information for the driver concerning this activation.

6. Method according to Claim 6, wherein the measure comprises one or more changeover options for the chassis and suspension of the vehicle and/or for a driver assistance system of the vehicle.

7. Method according to one of the preceding claims, in which
- data concerning the condition of the roadway are determined by means of one or more perceptive sensors of the vehicle and
- the first item of information concerning the first driving route section and/or the second item of information concerning the second driving route section and/or a reference variable are determined in dependence on the data.

8. Method according to one of the preceding claims, wherein a vehicle profile that is representative of the vehicle is provided, and wherein at least one parameter of the first set of parameters and/or of the second set of parameters is determined depending on the vehicle profile.

9. Method according to one of the preceding claims, wherein a person profile that is assigned to at least one vehicle occupant is provided, and at least one parameter of the first set of parameters and/or of the second set of parameters is determined depending on the person profile.

10. Method according to one of the preceding claims, in which at least one parameter of the first set of parameters and/or of the second set of parameters is compared with a prescribed highest value and, if the value is greater than the highest value, an item of information concerning at least one possible measure is determined and/or changeover data concerning changing a vehicle setting are determined.

11. Device for displaying driving route section factors influencing a vehicle, the device being designed to perform a method according to one of Claims 1 to 10.

12. System, the system comprising a device, a vehicle and a data processing device, wherein the device is designed according to Claim 11, wherein the device is also a portable device and is designed to exchange data with the vehicle and the data processing device and to perform the method according to one of Claims 1 to 10 together with the vehicle and/or the data processing device.

13. Computer program for displaying driving route section factors influencing a vehicle, wherein the computer program is designed to carry out a method according to one of Claims 1 to 10 when it is running on a data processing device for a system according to Claim 12 and/or in a device according to Claim 11.

14. Computer program product comprising a medium which can be read by a data processing device and on which executable program code according to a computer program according to Claim 13 is stored, wherein the program code when executed by a data processing device for a system according to Claim 12 or by a device according to Claim 11 performs the method according to one of Claims 1 to 10.

## Revendications

1. Procédé pour afficher des facteurs d'influence, sur un véhicule, de tronçons d'itinéraire, dans lequel
sont déterminés une première information sur un premier tronçon d'itinéraire et, en fonction de la première information, au moins un premier ensemble de paramètres représentatifs d'au moins un facteur d'influence du premier tronçon d'itinéraire sur le véhicule,
de plus, une deuxième information est déterminée pour un deuxième tronçon d'itinéraire et, en fonction de la deuxième information, au moins un deuxième ensemble de paramètres est déterminé, qui est représentatif d'au moins un facteur d'influence, sur le véhicule, du deuxième tronçon d'itinéraire,
**caractérisé en ce que**, en fonction d'au moins un premier ensemble de paramètres et d'au moins un deuxième ensemble de paramètres, un affichage est généré pour un conducteur de véhicule, qui représente un facteur d'influence du premier tronçon d'itinéraire et un facteur d'influence du deuxième tronçon d'itinéraire,
l'affichage étant conçu sous la forme d'une représentation comparative qui représente une comparaison d'au moins un facteur d'influence du premier tronçon d'itinéraire avec au moins un facteur d'influence du deuxième tronçon d'itinéraire,
l'affichage représentant un facteur d'influence du premier tronçon d'itinéraire et un facteur d'influence du deuxième tronçon d'itinéraire par rapport à une valeur de référence prédéfinie, et
la valeur de référence étant déterminée en fonction d'une information représentative d'au moins un facteur d'influence d'un tronçon d'itinéraire déjà parcouru dans le passé par le conducteur du véhicule et/ou par le véhicule ou qui est actuellement parcouru.

2. Procédé selon la revendication 1, dans lequel le premier ensemble de paramètres et le deuxième ensemble de paramètres sont déterminés en fonction d'au moins une propriété physique de la chaussée du tronçon d'itinéraire concerné.

3. Procédé selon l'une des revendications précédentes, dans lequel, pour l'affichage
- au moins une valeur statistique est représentée par la modification d'une représentation symbolique du véhicule, et/ou
- au moins une valeur qualitative du type de facteur d'influence est représentée par la modification d'une autre représentation symbolique du véhicule, et/ou
- au moins une valeur de progression d'un paramètre est représentée par une progression en fonction du temps de trajet ou de la distance parcourue.

4. Procédé selon l'une des revendications précédentes, dans lequel la première information et/ou la deuxième information est déterminée en fonction :
- de la fourniture d'une destination d'un système de navigation utilisé dans le véhicule,
- et/ou de la fourniture d'une carte de navigation,
- et/ou de la fourniture de données fournies par un serveur extérieur au véhicule.

5. Procédé selon l'une des revendications précédentes, dans lequel
- une information concernant au moins une mesure est déterminée en fonction d'au moins un paramètre du premier ensemble de paramètres et/ou du deuxième ensemble de paramètres, qui modifie le facteur d'influence respectif sur le véhicule, en particulier d'une manière spécifique ou dans une mesure prédéterminée,
comprenant en outre l'une des étapes suivantes :
- visualisation d'une information concernant la mesure déterminée, et/ou
- visualisation d'une action de commande du conducteur qui conduit à la mesure, et/ou
- activation de la mesure avec des ressources du véhicule et visualisation d'une information pour le conducteur sur cette activation.

6. Procédé selon la revendication 6, dans lequel la mesure comprend une ou plusieurs options de commutation pour la suspension du véhicule et/ou pour un système d'assistance à la conduite du véhicule.

7. Procédé selon l'une des revendications précédentes, dans lequel
- des données sur l'état de la chaussée sont déterminées au moyen d'un ou plusieurs capteurs perceptifs du véhicule, et
- la première information sur le premier tronçon d'itinéraire et/ou la deuxième information sur le deuxième tronçon d'itinéraire et/ou une valeur de référence est(sont) déterminée(s) en fonction des données.

8. Procédé selon l'une des revendications précédentes, dans lequel un profil de véhicule représentatif du véhicule est fourni, et dans lequel au moins un paramètre du premier ensemble de paramètres et/ou du deuxième ensemble de paramètres est déterminé en fonction du profil de véhicule.

9. Procédé selon l'une des revendications précédentes, dans lequel un profil de personne est fourni, qui est associé à au moins un occupant du véhicule, et au moins un paramètre du premier ensemble de paramètres et/ou du deuxième ensemble de paramètres est(sont) déterminé(s) en fonction du profil de personne.

10. Procédé selon l'une des revendications précédentes, dans lequel au moins un paramètre du premier ensemble de paramètres et/ou du deuxième ensemble de paramètres est comparé à une valeur maximale prédéfinie, et, si la valeur est supérieure à la valeur maximale, une information est déterminée pour au moins une mesure possible et/ou des données de commutation sont déterminées pour une modification d'un réglage du véhicule.

11. Dispositif pour afficher des facteurs d'influence, sur un véhicule, de tronçons d'itinéraire, le dispositif étant conçu pour mettre en œuvre un procédé selon l'une des revendications 1 à 10.

12. Système, le système comprenant un dispositif, un véhicule et un dispositif de traitement de données, le dispositif étant conçu selon la revendication 11, le dispositif étant en outre un dispositif portable et étant conçu pour échanger des données avec le véhicule et le dispositif de traitement de données et pour mettre en œuvre le procédé selon l'une des revendications 1 à 10 conjointement avec le véhicule et/ou le dispositif de traitement de données.

13. Programme informatique pour afficher des facteurs d'influence, sur un véhicule, de tronçons d'itinéraire, le programme informatique étant conçu pour mettre en œuvre un procédé selon l'une des revendications 1 à 10 lors de son exécution sur un dispositif de traitement de données pour un système selon la revendication 12 et/ou dans un dispositif selon la revendication 11.

14. Produit de programme d'ordinateur comprenant un support lisible par un dispositif de traitement de données, sur lequel est enregistré un code de programme exécutable selon un programme informatique selon la revendication 13, le code de programme mettant en œuvre le procédé selon l'une des revendications 1 à 10 lorsqu'il est exécuté par un dispositif de traitement de données pour un système selon la revendication 12 ou par un dispositif selon la revendication 11.
